# EUROPEAN PATENT SPECIFICATION

(11) **EP 3 507 259 B1**
(45) Date of publication and mention of the grant of the patent: **07.02.2024**
(21) Application number: 17845688.5
(22) Date of filing: 29.08.2017
(51) Int. Cl.: C04B 18/00, C12F 3/00, B01D 19/00, C12F 3/02

(54) **BIO-METHANATED SPENT WASH EVAPORATION PROCESS USING MULTI STAGE DEGASSING SYSTEM**
BIOMETHANISIERTES VERBRAUCHTES WASCHVERDAMPFUNGSVERFAHREN UNTER VERWENDUNG EINES MEHRSTUFIGEN ENTGASUNGSSYSTEMS
PROCÉDÉ D'ÉVAPORATION DE LIQUIDE DE LAVAGE ÉPUISÉ BIO-MÉTHANISÉ EN UTILISANT UN SYSTÈME DE DÉGAZAGE À ÉTAGES MULTIPLES

(30) Priority: 30.08.2016 IN 201621029473
(43) Date of publication of application: 10.07.2019
(73) Proprietor: Mojj Engineering Systems Ltd., Pune 411026 Maharashtra (IN)
(72) Inventor: W OKE, Dhirendra, Pune 411026 (IN)
(74) Representative: Dehns
(86) International application number: PCT/IN2017/050361
(87) International publication number: WO 2018/042452

(56) References cited:
- EP-A1- 2 609 988
- DE-A1-102010 025 819
- IN-A- 668 MU2 013
- US-A1- 2014 017 622
- Mahesh Kulkarni: "Zero Spent Wash Discharge Technologies 8 th October, 2015", , 8 October 2015 (2015-10-08), XP055664349, Retrieved from the Internet: URL:https://www.aidaindia.org/pdf/Mahesh%2 0Kulkarni%20,%20Praj.pdf [retrieved on 2020-02-03]

## Description

### FIELD OF THE INVENTION:

The present invention relates to a bio-methanated spent wash evaporation process using multistage degassing system. Particularly, it relates to defoaming of bio-methanated spent wash before it is subjected to multiple effect evaporation, using two stage degassing column and a third stage using thermomechanical degassing. More particularly, it relates to a two stage degassing system for defoaming of bio-methanated spent wash wherein the spent wash is degassed at lower temperature and higher vacuum in the first stage and at higher temperature and lower vacuum in the second stage in multi tray column and/or a third stage thermomechanical degassing before it is subjected to multiple effect evaporation for concentration. By using the multistage degassing system the bio-methanated spent wash can be defoamed completely and further concentrated using multiple effect evaporators without any side effects like foam formation and scaling of evaporator tubes during evaporation. The condensate obtained thus is free from spent wash colour and can be reused in the process without any further treatment.

### BACKGROUND AND PRIOR ART OF THE INVENTION:

Sugar manufacture from sugarcane generates large quantity of molasses as a valuable byproduct which contain 40-45% fermentable sugars. These molasses are used for the manufacture of ethyl alcohol. Ethyl alcohol is further dehydrated for use, as fuel oxygenation additive, as raw material in chemical industry, and for further conversion to acetic acid, ethyl acetate, acetone etc. as well as for potable purposes. Sugarcane molasses based distillery generates large quantity of waste water called spent wash or vinasse. Production of one litre of ethyl alcohol generates about 7-12 litres of spent wash. Sugarcane molasses based distillery spent wash is one of the highly organically loaded material, with characteristic obnoxious smell, dark brown colour and low pH making it extremely difficult for further treatment, meeting national effluent discharge limits prior to final safe discharge. The spent wash has very high COD (about 1, 30,000 mg/l) and high BOD (about 60000 mg/l) which needs to be reduced to meet the pollution control norms before it is discharged outside the distillery premises.

The distilleries presently follow three methods of spent wash treatment as follows
1. Bio composting: This is an aerobic treatment process. It uses bacterial/biological cultures to assist faster reduction/breakup of COD/BOD. Usually press mud from the sugar manufacturing process containing unrecoverable sugars is used as filler bed material. This is the lowest capital cost process but very much prone to lax execution. This method returns the valuable micro nutrients back to the soil.
2. Bio methanation: This is an anaerobic process. It uses methanogenic bacterial system to convert the BOD and COD to bio gas which is a mixture of methane and carbon dioxide, products of their metabolism. This method gives energy return. It also returns the micro nutrients back to soil if composed post methanation. The spent wash post biomethanation if composted properly will ensure zero discharge.
3. Incineration: This method uses specially designed waste heat recovery boiler doubling up as Incinerator. This will also ensure zero discharge. In this method all valuable micro nutrients are lost but it recovers valuable energy and potash, a valuable fertilizer. This is the costliest method in terms of capital cost and successful operation is dependent on proper design, operator skill and good evaporation system for optimum energy recovery.
Biomethanation combined with multiple effect evaporators' preferably integrated design and composting by far is better in terms of capital cost and reliable and easy operation.

The present practices of biomethanation followed by tertiary activated sludge process and deareation followed by evaporation and biocomposting has limitations. In spite of heavy investment, the desired results of "zero discharge" cannot be achieved due to technological limitations related to the process.(Y.Satyawali,M.Balkrishnan, J. Environmental Management, Vol. 86, Issue 3, Feb. 2008, page 481-96). Distillery waste water treatment through anaerobic digestion and phycoremediation-A green industrial approach K Sankaran, M Premalatha, M Vijayasekaran, VT Somasundaram;RenewableandSustainableEnergyReviews37(2014)634-643, Anaerobic digestion of vinasse from sugarcane ethanol production in Brazil: Challenges and perspectives Bruna S.Moraes a,n, Marcelo Zaiat b, Antonio Bonomi a Renewable and Sustainable Energy Reviews 44(2015)888-903.

The high organic content of molasses spent wash makes anaerobic treatment (Bio methanation) an attractive treatment in comparison to direct aerobic treatment (composting). Therefore, biomethanation is the most attractive primary treatment which converts nearly 70-80% COD into biogas which is used as fuel for the generation of steam in boilers or electricity using generators.

The spent wash coming out from bioreactor after biomethanation process still has COD of about 30000 mg/lit to 45000 mg/lit and BOD of about 3000mg/lit to 4000mg/lit and needs to be treated before its disposal in the environment. The present practice of tertiary activated sludge process for removal of COD and tertiary treatment to remove the colour of the spent wash is tedious process and cannot meet the stringent national environmental norms.

IN 102/DEL/2001 describes a process for the removal of colour of the spent wash after secondary treatment using ozone oxidation. Considering the quantity of the spent wash and requirement of ozone the process is not commercially viable. Ozonation of organic effluent is risky due to very high possibility of explosions.

WO 2012077124A1 describes a method for co-processing of molasses distillery effluent comprising steps of: -neutralization of spent wash (optional), -concentration the spent wash, co-processing of concentrated spent wash in a cement plant to achieve zero discharge. This method is not a stand-alone method and makes operation of distillery dependent on cement factory operation.

WO 2012042524A1 describes a process and apparatus which uses multiple stages or unit processes to treat wastewater, such as distillery spent wash which may be molasses spent wash (MSW). The stages include one or more of anaerobic digestion, chemical treatment, electrocoagulation, aerobic treatment, physical separation, and RO or adsorbent based treatment. A chemical treatment for the effluent from an anaerobic digester treating MSW is described. In an electrocoagulation step, a stable cathode is used to also provide electro flotation and hardness precipitation. Aerobic biological treatment and physical separation may be provided by a membrane bioreactor. This is a very elaborate and cumbersome route and may not be easily adopted due to very high investment and requirement skilled manpower to man the steps.

Document EP 2 609 988 A1 discloses a three stage degassing process for the removal of dissolved C02 from a spentwash.

Bio-composting is another current process being followed in the molasses based distillery for achieving zero discharge after biomethanation. The bio-composting process poses serious operation problems of leaching into soil of dilute biomethanated spent wash, if it is not concentrated, making it difficult to operate reliably.

The spentwash after bio-methanation is concentrated using multiple effect evaporator to obtain concentrated spent wash (30-35 % solids) and then it is sprayed over the pressmud from sugar industry in an open cement yard using aero tilling and culture to accelerate the conversion from refractory organics to digestible humous rich fertiliser in an open yard.

The spent wash after biomethanation contains large amount of dissolved CO₂ and when the spentwash is taken in multiple effect evaporator, the dissolved CO₂ starts coming out due to heating. This generates lot of foam in the evaporator tubes hindering the heat transfer to spent wash in the evaporator tubes which in turn forms hard scaling on the inner tube surface affecting the heat transfer in the tubes. After the scale formation of the inner surface of the tube the evaporator needs to be stopped to remove the scales by chemical cleaning (CIP: clean in place) and needs to be started again. In normal practice the evaporators are operated for 18 to 20 hours in a day and 4 to 6 hours are stopped for cleaning making the operation evaporators quite cumbersome. Apart from chemical cleaning, frequent manual cleaning using hard steel wire brush or by high pressure jets is needed, making the evaporation operation still difficult.

Considering the long standing problems of prior art like long, tedious, non-environmental friendly, resource intensive processes which cannot achieve much desired and mandated zero discharge, there is a need for suitable process and equipment for concentration of biomethanated spent wash.

To provide solution to the demands of the prior art the present invention provides a multi stage degasser unit for defoaming of the bio-methanated spent wash to avoid the scale formation in multiple evaporator tubes during evaporation as well as contamination of process condensate by spent wash colour.

### OBJECTS OF THE INVENTION:

The objective of the present invention is to provide a three stage degasifying/defoaming process for degassing of bio-methanated spent wash before it is subjected to multiple effect evaporators for concentration.

Yet another objective of the present invention to provide a three stage degasifier for complete removal of the dissolved CO₂ from bio-methanated spent wash at two different temperatures and pressures in a column to achieve two different temperature profiles in a single column for efficient degassing and by third stage thermomechanical process to avoid carryover of the foam to the evaporator and contamination of spent wash colour in process condensate. According to another objective of the present invention is provided a process for the removal of dissolved CO₂ from biomethanated spent wash completely using three stage degassing system to avoid foaming and scaling in the evaporator for smooth and continuous operation of evaporator without everyday stoppage for cleaning and generation of additional effluent during frequent CIP requirement.

### SUMMARY OF THE INVENTION:

In accordance with the objectives of the current invention, it discloses a three stage degasifying/defoaming process for bio-methanated spent wash to completely remove dissolved CO₂ by varying the temperature and pressure in two columns.

The column design although known to the practised ones in the prior art as the degasifying column as the first step in the fermented wash distillation, it cannot handle biomethanated spent wash which also contains active mycelium which continuously generates carbon dioxide as part of their metabolic process , as tried by many practitioners.

### BRIEF DESCRIPTION OF THE DRAWINGS:

**Fig 1** **&** **4****:** Schematic of the three staged degassing/defoaming reactor
Fig 5: Spray arrangement of degassing unit

### DETAILED DESCRIPTION OF THE INVENTION:

The invention will now be described in detail in connection with certain preferred and optional embodiments, so that various aspects thereof may be more fully understood and appreciated.

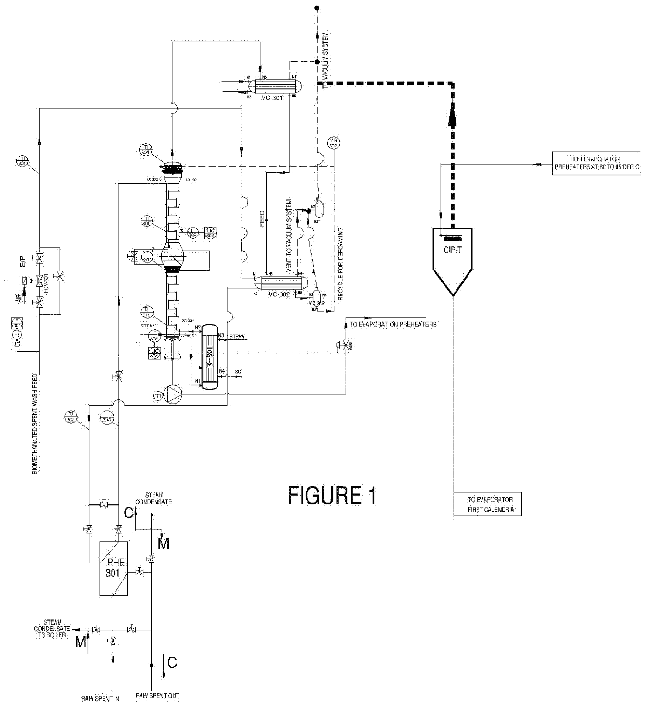

The invention provides a three stage degassing process for the removal of dissolved CO₂ from the biomethanated spent wash so that the foam formation during its evaporation which causes the scale formation in the evaporator as well as carryover/contamination process condensate is avoided(which leads to frequent shut down and cleaning of evaporator) and the evaporators can be smoothly operated for concentration of biomethanated spent wash. According to the invention, the biomethanated spent wash is preheated using heat exchangers using the heat of fresh raw spent wash or any other waste heat stream available in distillery, and fed to the low temperature (56 to 62°C) zone of the column (Fig. 1) which is under higher vacuum (0.15 to 0.31 Bar) and the partly degasified spent wash is fed to the part of the column which is operated at higher temperature (68 to 85°C) and higher pressure (0.33 to 0.56 Bar) to degasify the biomethanated spent wash in two stages in one column.

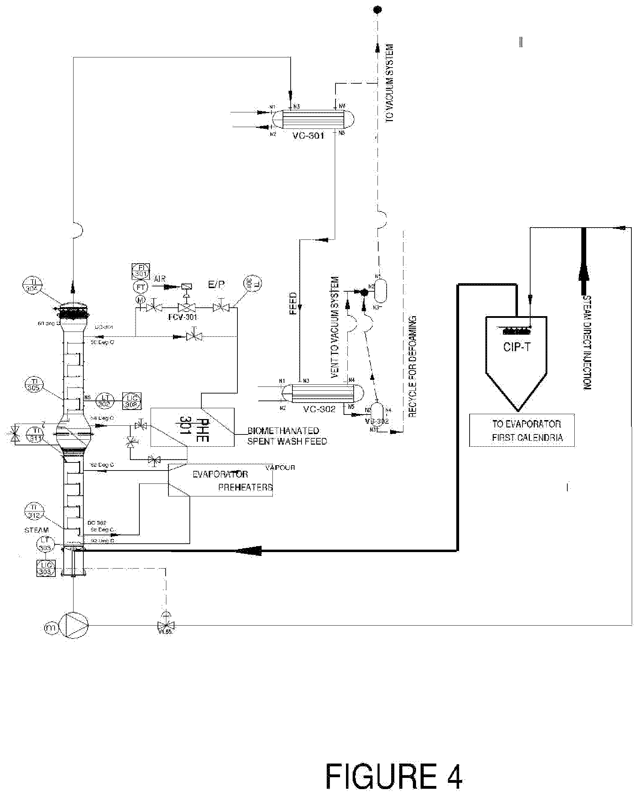

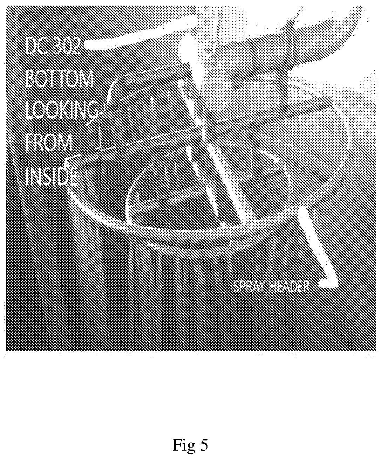

The biomethanated spent wash partly degasified in two stages is further flashed in a vessel if required as shown in Fig. 4 for example degassed further at higher temperature of 92 to 98 ° C and the foam formed in the vessel is destroyed by feeding the incoming heated biomethanated spent wash through nozzles to generate a high surface area spray of the spent wash with a jet flow at pressure which breaks the foam to release the entrapped gases resulting in complete removal of dissolved gases from biomethanated spent wash as shown Fig 5 .

The invention will now be described in detail in connection with certain preferred and optional embodiments, so that various aspects thereof may be more fully understood and appreciated.

**Examples** Following examples are given by way of illustration therefore should not be construed to limit the scope of the invention.

**Example 1:** The biomethanated spent wash first passes through one of the condensers on two stage degasifying column to use the heat from the flashed vapors in second or first stage VC 302 of the column. However VC 301 also can be used for heat recovery. Then the spent wash passes through a heat recovery plate heat exchanger or any other type of heat exchanger either direct or indirect contact type PHE 301 (for example) using heat of the returning condensate or the heat of the raw spent wash from the first distillation (stripping) column,(not shown in the figure); or vice versa heat exchange sequence, depending on the temperatures available and the fact that the heat flows from higher to lower temperature.

The biomethanated spent wash will be heated to about 56 to 62°C prior to entering the upper portion of the degassing column DC 301. Here the spent wash is subjected to higher vacuum (0.1 TO 0.15 Bars) corresponding to 46 to 54°C and removing foam. It will then enter the second stage column (DC 302).The vapors from the DC 302 will heat and degasify the down flowing biomethanated spent wash In the reboiler it will get heated to 68 to 82 °C and will be bottom flashing there and giving it's heat to descending spent wash.

The bottom of the DC 301 is thus fed to first stage DC 302 column well below the first tray, preferably below the second or third tray to avoid foam carryover. The wash from bottom of the column DC 302 is then taken out at 80° C preferably between 80 to 85 ° C and sent to evaporator preheaters( not shown in the drawing) for further heating to 90°C preferably to 85 to 97°C to avoid excessive separation of calcium compounds and increased tendency of scaling.

The dissolved gases and the active mycelium in the spent wash continue to generate carbon dioxide causing foam and there by breaking the film on the evaporator Calandrias, which in turn leads to excessive scaling.

Hence a third stage is introduced depending on the source and quality of the input wash. If the mycelium is still active then the spent wash is given to a vacuum vessel CIP-T with a spray arrangement from top via use of higher pressure pump for small droplet size generation at higher velocity. The tank is connected to the vacuum system to take away the flash vapors either to be utilized to heat the incoming room temperature biomethanated spent wash or to the condenser prior to vacuum pump.

Therefore, this invention discloses a multi stage degassing process which does not require big capital or space but is a variation of existing reactors such that it avoids scaling. This scaling necessitates frequent chemical and /or mechanical cleaning of the reactor leading to additional generation effluent and necessity of creating storage when the evaporator is under cleaning. Due to this the industry has to buy oversized equipment and create storage of effluent which is by itself not a healthy practice.

The illustration in FIGURE 1 is one example of the organization of various equipments which can be rearranged to suit a particular distillery.

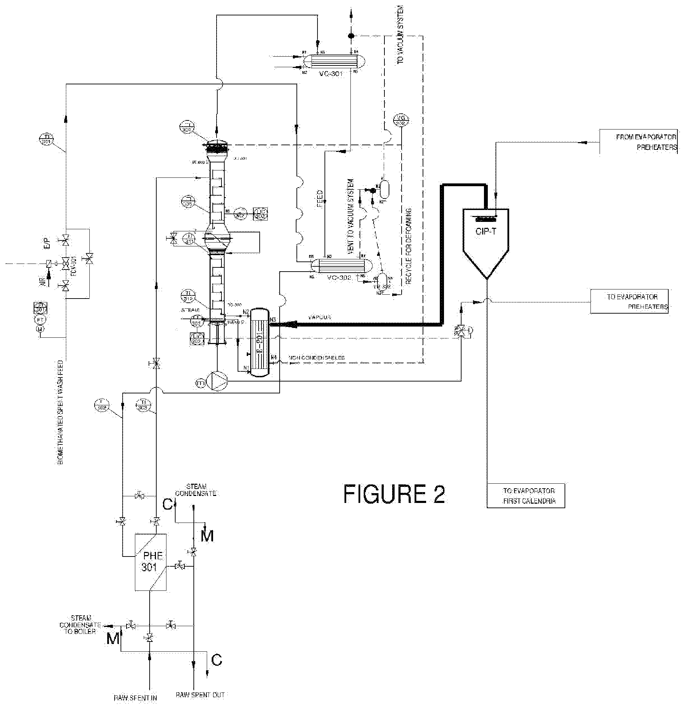

The illustration in FIGURE 2 is another example of the organization of various equipments which can be rearranged to suit a particular distillery. In this configuration vapors from the CIP-T i.e. the flash degasser are used in the reboiler E-201 instead of fresh steam thus reducing the steam consumption. Here the feed to the CIP-T is given between 90 to 97 Deg C and flash vapors at 85 to 90°C are used in the E-201 This can be done if the degassing is not completed by configuration as in FIGURE 1.

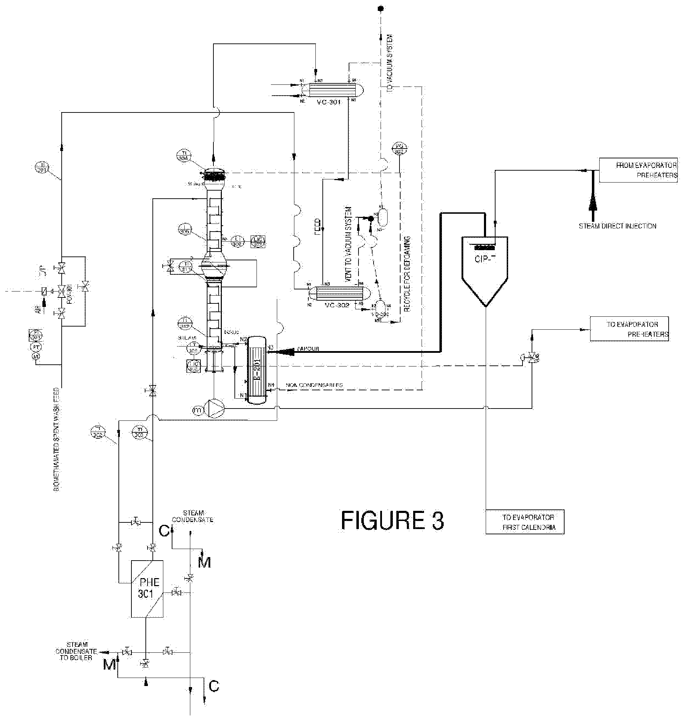

The illustration in FIGURE 3 is one example of the organization of various equipments which can be rearranged to suit a particular distillery. In this configuration fresh steam is injected after the Evaporator preheating and before admitting into CIP-T to heat the spent wash to 95 to 105 ° C. The flash vapors from CIP-T as before but at 78 to 90° C are again given to E-301 instead of fresh steam. This deactivates the mycelium more effectively and also reduces the energy consumption of the overall evaporation unit.

The illustration in FIGURE 4 is one more example of the organization of various equipment which can be rearranged to suit a particular distillery. In this configuration progressive heating and degassification is achieved through using the evaporator preheaters as shown in the figure 5 with the typical temperatures, fresh steam is injected after the vacuum degassing and before admitting into CIP-T to heat the spent wash to 95 to 105 ° C. The flash vapors from CIP-T as before but at 68 to 70° C are again given to DC-302 bottom through the high pressure spray ring as shown in the Fig 5 instead of fresh steam. This deactivates the mycelium more effectively and also reduce the energy consumption of the overall evaporation unit.

### Advantages of the invention

> Process avoids need of oversized equipments to degass biomethanated spent wash.
➢ Process helps to ensure meeting the zero-discharge standards of the industry.
➢ Process is environment friendly.
➢ Process minimizes energy usage during the treatment of biomethanated spent wash and drastically decreases up time of the zero discharge system.
➢ Mycelium are deactivated more efficiently

## Claims

1. A novel three stage degassing process for the removal of dissolved CO₂ from biomethanated spentwash which also contains active mycelium comprising:
a. Preheating the biomethanated spent wash in heat exchangers from 50 to 60 °C;
b. Feeding products of (a) to a low temperature zone (DC 301) of a column at a temperature of 56 to 62°C and a pressure of 0.15 to 0.31 Bar;
c. Feeding products of (b) to a high temperature zone (DC 302) of the column at a temperature of 68 to 85°C and a pressure of 0.33 to 0.56 Bar;
wherein the degassing is in two stages in one column; and
wherein the spent wash partly degasified in two stages is further flashed at a temperature of 92 to 98°C in a vessel (CIP-T) with nozzles to generate a high surface area spray of the spent wash with a jet flow for complete removal of dissolved gases from biomethanated spent wash.

2. The process of claims 1, wherein the preheating of biomethanated spent wash is done with heat of fresh raw spent wash.

3. The process of claim 1, wherein the preheating of biomethanated spent wash is done by other waste heat stream available in distillery.

4. The process of claim 1, wherein the biomethanated spent wash is heated to a temperature of 95 to 105°C before entry into the vessel (CIP-T) by injecting fresh steam after the vacuum degassing stages and before admission into the vessel.

5. The process of claim 1, wherein the vessel (CIP-T) is connected to the vacuum system to take away the flash vapors either to be utilized to heat the incoming room temperature biomethanated spent wash or to the condenser prior to vacuum pump.

## Patentansprüche

1. Neuartiger dreistufiger Entgasungsprozess zum Entfernen von gelöstem CO₂ aus biomethanisierter Schlempe, die auch aktives Myzelium enthält, umfassend:
a. Vorwärmen der biomethanisierten Schlempe in Wärmetauschern von 50 auf 60 °C;
b. Einspeisen von Produkten aus (a) in eine Niedertemperaturzone (DC 301) einer Säule bei einer Temperatur von 56 bis 62 °C und einem Druck von 0,15 bis 0,31 bar;
c. Einspeisen von Produkten aus (b) in eine Hochtemperaturzone (DC 302) der Säule bei einer Temperatur von 68 bis 85 °C und einem Druck von 0,33 bis 0,56 bar;
wobei das Entgasen in zwei Stufen in einer Säule erfolgt; und
wobei die in zwei Stufen teilweise entgaste Schlempe weiter bei einer Temperatur von 92 bis 98 °C in einem Gefäß (CIP-T) mit Düsen geflasht wird, um ein hohes Oberflächenspray der Schlempe mit einer Strahlströmung zum vollständigen Entfernen von gelösten Gasen aus der biomethanisierten Schlempe zu erzeugen.

2. Prozess nach Anspruch 1, wobei das Vorwärmen der biomethanisierten Schlempe mit Wärme von frischer Rohschlempe erfolgt.

3. Prozess nach Anspruch 1, wobei das Vorwärmen der biomethanisierten Schlempe durch einen anderen Abwärmestrom erfolgt, der in der Destillerie verfügbar ist.

4. Prozess nach Anspruch 1, wobei die biomethanisierte Schlempe auf eine Temperatur von 95 bis 105 °C erwärmt wird, bevor sie durch Einspritzen von frischem Dampf in das Gefäß (CIP-T) nach den Vakuumentgasungsstufen und vor dem Einlass in das Gefäß eintritt.

5. Prozess nach Anspruch 1, wobei das Gefäß (CIP-T) mit dem Vakuumsystem verbunden ist, um die F!ashdämpfe zu entnehmen, die entweder zum Erwärmen der einkommenden biomethanisierten Schlempe auf Raumtemperatur oder für den Kondensator vor der Vakuumpumpe verwendet wird.

## Revendications

1. Nouveau processus de dégazage en trois étapes pour l'élimination du CO₂ dissous dans une solution de lavage usée biométhanisée qui contient également du mycélium actif, comprenant :
a. le préchauffage de la solution de lavage usée biométhanisée dans des échangeurs de chaleur de 50 à 60 °C ;
b. l'introduction des produits de l'étape (a) dans une zone à basse température (DC 301) d'une colonne à une température de 56 à 62 °C et à une pression de 0,15 à 0,31 bar ;
c. l'introduction des produits de l'étape (b) dans une zone à haute température (DC 302) de la colonne à une température de 68 à 85 °C et à une pression de 0,33 à 0,56 bar ;
dans lequel le dégazage se fait en deux étapes dans une colonne ; et
dans lequel la solution de lavage usée partiellement dégazée en deux étapes est de nouveau lavée à une température de 92 à 98 °C dans une cuve (CIP-T) équipée de buses pour générer une pulvérisation à grande surface de la solution de lavage usée avec un flux de jet pour l'élimination complète de gaz dissous de la solution de lavage usée biométhanisée.

2. Processus selon la revendication 1, dans lequel le préchauffage de la solution de lavage usée biométhanisée est effectué avec la chaleur de la solution de lavage usée fraîche et brute.

3. Processus selon la revendication 1, dans lequel le préchauffage de la solution de lavage usée biométhanisée est effectué par un autre flux de chaleur résiduelle disponible dans la distillerie.

4. Processus selon la revendication 1, dans lequel la solution de lavage usée biométhanisée est chauffée à une température de 95 à 105 °C avant d'être introduite dans la cuve (CIP-T) par injection de vapeur fraîche après les étapes de dégazage sous vide et avant l'admission dans la cuve.

5. Processus selon la revendication 1, dans lequel la cuve (CIP-T) est reliée au système de vide afin d'éliminer les vapeurs de lavage, soit pour les utiliser pour chauffer la solution de lavage usée biométhanisée à température ambiante, soit pour les envoyer dans le condenseur avant la pompe à vide.
